# EUROPEAN PATENT APPLICATION

(11) **EP 1 615 456 A1**
(43) Date of publication of application: **11.01.2006**
(21) Application number: 04291763.3
(22) Date of filing: 09.07.2004
(51) Int. Cl.: H04Q 7/32, H04Q 7/38

(54) **Method to detect whether a smart card is dialoguing with a phone handset**

(71) Applicant: Axalto S.A., 92120 Montrouge (FR); Axalto Technologies Asia Ltd., Kowloon, Hong Kong (CN)
(72) Inventor: Oi, Poing Kin, 92120 Montrouge (FR); Lam, Clément, 92120 Montrouge (FR); Cham, Alan, 92120 Montrouge (FR); Cheung, Wilson, 92120 Montrouge (FR)
(74) Representative: Cassagne, Philippe M.J.

(57) **Abstract**

A method to detect whether a smart card is dialoguing with a phone handset, said method comprising a checking step to test whether a command, or a group of commands, received by the smart card matches a set of handset/card dialog pattern recognition rules.

## Description

### BACKGROUND OF THE INVENTION

### 1. Field of the invention

The invention relates to a method for preventing a smart card from being cloned by a cloning software, and to a smart card able to operate such a method. The smart card is preferably a SIM card.

### 2. Description of the Prior Art

A SIM card ("Subscriber Identity Module") is a smart card that is used for authentication in a GSM (Global System for Mobile communications) network, a widely used digital network for mobile communications.

To access a service in a GSM network, for example to make a call or receive a call, an end user first needs to subscribe to the service provided by a mobile network operator. He is then provided with a SIM smart card, within which data about his identity are stored. The end user may access the service as soon as the SIM card is inserted in a mobile phone handset.

To authorize a handset to use its resources, the mobile network first checks that the identity provided by the handset by radio is correct. This process is called "end user authentication". End user authentication is necessary to protect the mobile network against illegal use of its resources and to protect the subscriber by preventing third persons using his account. Such authentication may be checked for different purposes, in particular when the mobile phone is powered up.

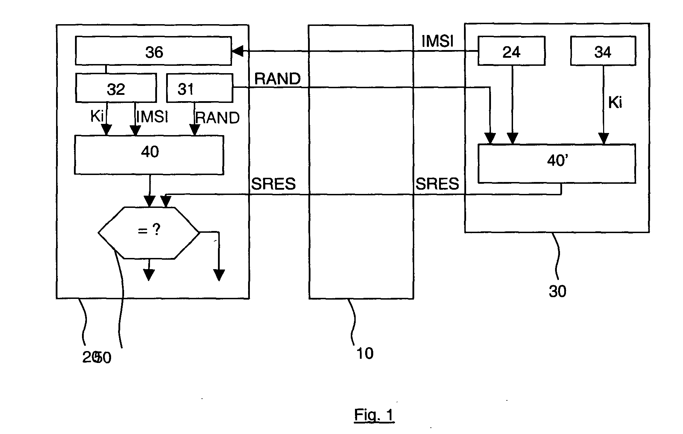

Figure 1 represents an authentication process which may be run when a handset 10 is powered up and tries to log onto a mobile operator's network 20.

The subscriber's identity IMSI, or "International Mobile Subscriber Identity", is the international identity of a subscriber S. It is stored into a memory 24 of a SIM card 30 inserted in the handset 10.

To start the authentication process, the handset 10 first reads from an inserted SIM card 30 the subscriber's identity IMSI, and sends it to the network 20, more precisely to an Authentication Center (AUC) of the network. In answer, a module 31 of the network 20 generates a random number RAND and sends it with an authentication request to the handset 10. The handset 10 transmits RAND to the SIM card 30.

The same authentication key Ki, specific to the subscriber S and associated with IMSI, is stored in a memory 32 in the authentication center of the GSM network 20 and in a memory 34 of the SIM card 30. Ki remains secret and is never sent during the authentication process.

From the received value of IMSI, a module 36 of the authentication center retrieves the corresponding value of Ki stored in the memory 32. This value of Ki, the generated value RAND and the received value IMSI are then input into an authentication algorithm 40.

The same authentication algorithm 40' is available in the SIM card 30. Independently from the authentication center, the SIM card inputs into the authentication algorithm 40' the value of Ki stored into the memory 34, the value of IMSI stored in the memory 24 and the value RAND received from the network. The authentication algorithm consequently calculates an authentication result, or "Signed response SRES". The authentication result SRES is sent by the handset 10 to the network 20.

A comparator 50 of the authentication center then compares the result SRES calculated by the SIM card 30 with the result of the calculation of the authentication algorithm 40. If these results are the same, the user is authenticated as a valid subscriber and is allowed to access the service provided by the operator. Otherwise the user is rejected and discontinued to access the network 20.

Each subscriber has a unique pair of IMSI and Ki to access the network service. SIM cloning is a process in which a third party has successfully retrieved the IMSI and Ki pair from a true user and reproduced it in another SIM card. The cloned SIM card, using the same IMSI and Ki, can then access the network 20 without paying the related charges.

Retrieving the subscriber's identity IMSI does not pose major difficulties. As far as Ki is concerned, SIM smart cards are tamper-proof devices so that Ki is prevented from being retrieved by any device or a third party. However Ki may be found by analyzing the correlation between the input and output of the authentication algorithm 40' by using the 'collision method'. The basic idea of the collision method is to detect some identical authentication results, called "collisions", from different authentication input to the authentication algorithm 40'. Each collision can be used to get some information of some part of Ki. Typically, after 50,000 to 150,000 trials, enough collision data is available to determine the full Ki.

There are some commonly available tools in the market using a simple card reader and a personal computer that will automatically send huge numbers of authentication requests to a SIM card and then predict Ki based on the authentication results using the collision method. Usually, this can be done within one to two days.

There is a need to find a method able to fight against this kind of attacks.

The aim of the present invention is to provide for such a method.

### SUMMARY OF THE INVENTION

The aim of the invention is achieved with a method to detect whether a smart card is dialoguing with a phone handset, said method comprising a checking step wherein it is tested whether a command, or a group of commands, received by said smart card matches a set of handset/card dialog pattern recognition rules.

The rules are determined to be specific to a dialog between a smart card and a phone handset, so that the pattern of the dialog of the smart card with another entity does not match them. When the smart card is dialoguing with such a third entity, it may infer that this entity is not a phone handset.

The method of the invention is preferably used to prevent SIM cloning. Once it has detected that the SIM card is not dialoguing with a phone handset but with another entity, the method may advantageously fool this entity, i.e. adapt its answers to the received commands so that no determination of Ki by the entity may be possible, or preferably so that only a wrong value Ki may be determined by the third entity.

SIM cloning is therefore prevented efficiently and at low cost.

Preferably, the method of the invention is implemented as a part of an software program loaded in the smart card. It is therefore easier to detect whether the card is being used in a handset or is dialoguing with a computer running a cloning software. Moreover, no change is advantageously required in the handset or in the Authentication Center (AUC) and the running of the program has no sensible impact on the normal behavior of the network and of the handset.

The method according to the invention preferably presents the following features.
- Said set of dialog pattern recognition rules tests whether said group of commands contains at least a first determined number of commands which are not necessary for proceeding to an authorized subscriber authentication.
- Said set of dialog pattern recognition rules tests whether said group of commands contains a second determined number of selected GSM commands necessary for proceeding to an authorized subscriber authentication, said GSM commands being selected because of the predictability of the number of their occurrences in said group of commands. Selected commands may be, for example, STATUS, READ BINARY or UPDATE BINARY.
- The method of the invention triggers said checking step every time a third determined number of commands have been received by said smart card.
- Said group of commands contains a fourth determined number of commands successively received previously to said triggering.
- The method according to the invention provides a fake authentication key Ki* when said command, or a group of commands, does not match said set of dialog pattern recognition rules.
- The method according to the invention waits so as to make the processing time the same, whether said set of dialog pattern recognition rules is matched by said command or group of commands, or not.
- Said smart card is a SIM card and said commands are GSM commands.

The invention also relates to a smart card, including a software adapted to operate a method according to the invention.

The invention will now be described in more details.

### BRIEF DESCRIPTION OF THE DRAWINGS

Figure 1 is a diagrammatic scheme of a typical authentication process between a handset and a GSM network.
Figure 2 represents an example of a program which may be loaded in a smart card according to the invention.
Figure 3 represents a pattern recognition method according to the invention used in the program represented in Figure 2.

### DETAILED DESCRIPTION OF THE PREFERRED EMBODIMENTS

Before using a pattern recognition method according to the invention, it is first necessary to determine a relevant set of pattern recognition rules.

A "pattern of a handset/card dialog" is a set of features of this dialog determined to enable its characterization. These features may include frequencies of occurrences or non occurrence of specific commands, delays between occurrences of two determined commands, measured by an elapsed time or by a number of received commands, occurrence of a sequence of commands, taking into account only received commands, only sent commands, or both types of commands, transmitted or received values, etc.

By "command", it is meant any request or information data received by the smart card.

The number of possible features of a pattern is not limited. Among the possible features, it is therefore necessary to select the most discriminating ones, depending on the target dialog to which the patterned dialog is to be distinguished.

For instance, when the method according to the invention is to be used to fight SIM cloning software, the target dialog may be a dialog between a SIM card and a common SIM cloning software.

The most discriminating features would then be the features of the patterned dialog which are not met by the targeted dialog, or with a low probability.

A pattern recognition rule may be defined as a test to verify whether the targeted dialog presents a feature of the patterned dialog. A pattern recognition rule will be all the more pertinent that it relates to a more discriminating feature. Preferably, a set of pattern recognition rules should be based on the most discriminating features, and contain enough rules to guarantee a high probability of success of the recognition.

To prepare a set of pattern recognition rules to be used to distinguish a computer running a cloning software and a phone handset, one may proceeds as follows.

First, the commands that are being received by a SIM card during an authentication process according to the GSM standard, called commands APDUs, and the commands received during a dialog with a computer running a cloning software should be recorded. These records should be analyzed and compared to determine an appropriate set of pattern recognition rules, i.e. highly discriminating and containing a minimum of rules.

According to the GSM standard (R1: 3GPP TS 11.11: "Specification of the Subscriber Identity Module - Mobile Equipment (SIM - ME) interface"), the handset sends, for example, the following APDU commands:
- To request the Loci information, the handset will send the following commands to the SIM card:

| | |
|---|---|
| SELECT EF LOCI | A0 A4 00 00 02 6F7E |
| READ BINARY (11 bytes) | A0 B0 00 00 0B |

- For a FPLMN request, the handset will update the FPLMN file with the latest list of forbidden FPLMN. The handset will send the following commands:

| | |
|---|---|
| SELECT EF FPLMN | A0 A4 00 00 02 6F7B |
| UPDATE BINARY (12 bytes) | A0 D6 00 00 0C |
| | 12342122414928392183991 (sample data) |

- Every 30 seconds, the handset will get the status of the card (Status request). The handset will then send the following commands to the SIM card:

| | |
|---|---|
| STATUS | A0 F2 00 00 0C |
| GET RESPONSE | A0 C0 00 00 0C |

- For an Authentication Request, the handset will send the following commands:

| | |
|---|---|
| RUN GSM ALGO | A0 88 00 00 10 |
| | 12798147170389729047823748293024 (sample data) |
| GET RESPONSE | A0 C0 00 00 08 |

A sample of commands received by the SIM card should include a predictable number of these commands if these commands have been sent by a handset in normal operation, and a different number of these commands if these commands have been sent by a cloning software. These commands may therefore be selected to create pattern recognition rules.

For example, a common cloning software in the market basically sends repeatedly multiple "RUN GSM ALGO" commands to the SIM card and gets the authentication results until it can calculate the real Ki. But in a normal dialog with a handset, the SIM card should not receive more than 30% "RUN GSM ALGO" commands because the "RUN GSM ALGO" is normally only used when the handset needs to log on to the network or is making a call.

Consequently, a pattern recognition rule may be: "For the last 100 commands, the number of RUN GSM ALGO commands is less or equal to 30".

Besides, a common cloning software will normally not send any commands which would not be useful to get the authentication results to calculate the real Ki. For example, it will never send commands such as "STATUS" or "READ BINARY" or "UPDATE BINARY". Otherwise, the costs of implementing the software would increase, as well as the time to get enough iterations of the authentication algorithm to determine Ki. Reception of such commands could therefore also be the object of pattern recognition rules.

A handset normally sends the "STATUS" command to the SIM card every 30 seconds and the execution of 100 commands in the card takes normally more than 2.5 minutes. For the last 100 commands sent from the handset, the number of "STATUS" command should therefore not be less than 5.

Consequently, another pattern recognition rule may be: "For the last 100 commands, the number of STATUS commands is more than 5".

For the same reason, another pattern recognition rule may be: "For last 100 commands, the number of READ BINARY commands is more than 5".

Many patent recognition rules of various types may be set up and checked at different checkpoints to determine whether the SIM card is being used in a handset and in a real mobile network.

The pattern of the dialog between cloning software and a SIM card may be distinguished from the dialog between a handset and a SIM card, since only the latter matches the pattern recognition rules. The number of checkpoints and of the tested pattern recognition rules depends on how strict the checking is to be. The probability of a correct recognition will be increased if the most discriminating rules are used and if the number of tested rules is increased, so that their results may be compared and correlated.

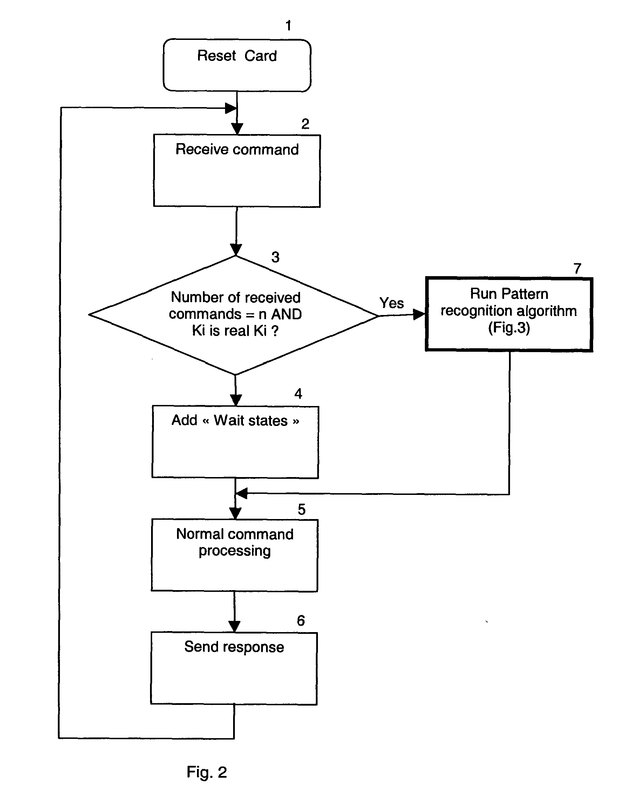

Figure 1 was described here above. We now refer to Figure 2.

When the SIM card is activated, it is first reset, i.e. the card and phone establish the communication protocols for upcoming communications (box 1 in figure 2). Then it starts receiving commands (box 2).

Running a recognition algorithm to check the set of recognition rules is not necessary after the reception of any new command since a cloning software may not determine Ki before a long dialog with the SIM card. Besides, permanent checking would slow the SIM card. Finally, the recognition rules may require a sample of commands to be tested and it may be preferable to use completely different samples at each test. It is therefore preferable to only run the recognition algorithm from time to time, for example each time a number "n" of commands, for example 100 commands, have been received since the last test, or after a determined delay.

Running a recognition algorithm to check the set of recognition rules is not necessary either if the SIM card has already detected that it was dialoguing with a cloning software. This situation may be detected due to the fact the SIM card is already using a fake value of Ki, hereafter Ki*. Preferably, the recognition algorithm will only be run if the SIM card has not detected any anomaly yet, for example if the used Ki is real.

When the SIM card receives a command, it checks whether it is currently using a real Ki, i.e. that it still considers that it is dialoguing with a normal handset, and whether "n" commands have been counted by a "command counter" since the last reset of this counter (box 3).

If at least one of these conditions is not matched, the SIM card preferably waits for a time determined so that the processing time be the same, whether the pattern recognition algorithm has been run or not (box 4). Then, the SIM card resumes normal processing (box 5) and sends a response according to the received command (box 6).

If both conditions are matched, a pattern recognition algorithm according to the invention is triggered (box 7).

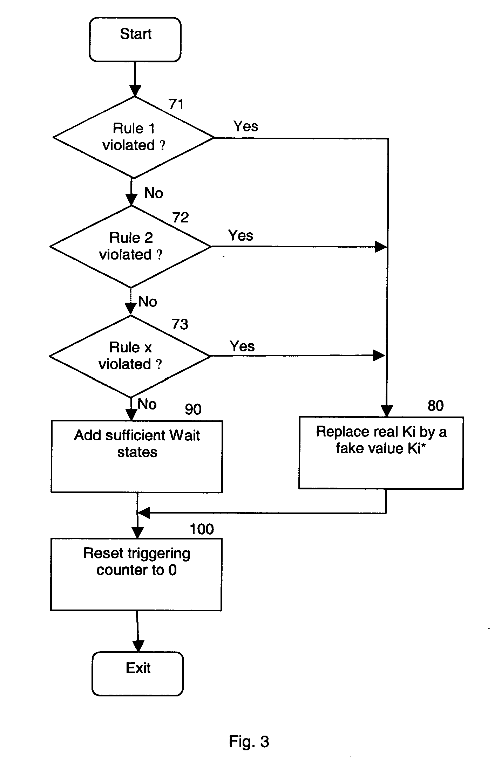

The pattern recognition algorithm is represented in more details in figure 3.

The SIM card checks for the previous "n" commands, whether any of the set of pattern recognition rules has been violated.

The set of pattern recognition rules may contain one or several recognition rules. In the example of figure 3, it contains "x" rules which are successively checked (boxes 71, 72, 73 of figure 3).

If any of the pattern recognition rules is violated, the SIM card infers that it is being used in a cloning software. Then it interrupts the checking of the rules, and replaces the real Ki by a fake value Ki* (box 80). In fact, the real Ki will remain stored into the memory 32, but any time Ki will be required, for example for the authentication algorithm 40', Ki* will be provided. Hence Ki* will replace the real Ki any time the authentication algorithm will be used during the cloning session.

The cloning software will therefore get the authentication results provided by the authentication algorithm 40' using the fake value Ki* instead of the real Ki. Eventually, the cloning software will still be able to find the fake value Ki* but the real Ki will never be retrieved during the cloning session. Consequently, the software will advantageously not be able to detect that the determined value is Ki or Ki*.

Before replacing the real Ki by the fake value Ki*, the SIM card may also wait for several rules to be violated to improve the recognition security.

If no pattern recognition rule has been violated, the SIM card preferably enters into a wait state for a time determined so that the processing time be the same, whether the real Ki has been replaced by the fake value Ki* or not (box 90). It is therefore impossible to infer from the processing time whether the cloned Ki is a fake one or not.

Then the 'command counter' is reset to 0 (box 100) so that another round of sampling may begin.

The program resumes normal command processing (box 5 of figure 2).

In another embodiment, the program resumes normal command processing (box 5 of figure 2) immediately after replacing real Ki by Ki*, without resetting the command counter to 0.

The following rule 1 was used for a dialog pattern recognition algorithm used by a SIM card loaded into a real handset for normal usage. No abnormal behavior was observed.
Rule 1: For last 100 commands, the number of RUN GSM ALGO command is less than 20

A common SIM cloning software was then used to try to clone the SIM card. After the cloning software has finished the cloning process, the software reported the faked Ki* had been found. The real Ki was not retrieved.

## Claims

1. A method to detect whether a smart card (30) is dialoguing with a phone handset (10), said method comprising a checking step to test whether a command, or a group of commands, received by said smart card (30) matches a set of handset/card dialog pattern recognition rules.

2. A method according to claim 1, wherein said set of dialog pattern recognition rules tests whether said group of commands contains at least a first determined number of commands which are not necessary for proceeding to an authorized subscriber authentication.

3. A method according to claim 1, wherein said set of dialog pattern recognition rules tests whether said group of commands contains a second determined number of selected GSM commands necessary for proceeding to an authorized subscriber authentication, said GSM commands being selected because of the predictability of the number of their occurrences in said group of commands.

4. A method according to claim 1, which triggers said checking step every time a third determined number of commands have been received by said smart card (30).

5. A method according to claim 4, wherein said group of commands contains a fourth determined number of commands successively received previously to said triggering.

6. A method according to claim 1, which provides a fake authentication key (Ki*), when said command, or a group of commands, does not match said set of dialog pattern recognition rules.

7. A method according to claim 1, which waits so as to make the processing time the same, whether said set of dialog pattern recognition rules is matched by said command or group of commands, or not.

8. A method according to claim 1, wherein said smart card is a SIM card and said commands are GSM commands.

9. A smart card including a software adapted to operate a method according to any of the previous claims.
